# FASCICULE DE BREVET EUROPEEN

(11) **EP 0 399 023 B1**
(45) Date de publication et mention de la délivrance du brevet: **13.04.1994**
(21) Numéro de dépôt: 90900211.5
(22) Date de dépôt: 08.12.1989
(51) Int. Cl.: H04J 3/06, H04L 7/04

(54) **DISPOSITIF DE SYNCHRONISATION POUR UNE SUITE DE TRAMES A LONGUEUR VARIABLE**
SYNCHRONISATIONSEINRICHTUNG FÜR EINE RAHMENFOLGE MIT VARIABLER LÄNGE
DEVICE FOR SYNCHRONIZING A SERIES OF VARIABLE LENGTH RASTERS

(30) Priorité: 09.12.1988 FR 8816219
(43) Date de publication de la demande: 28.11.1990
(73) Titulaire: THOMSON-CSF, 75008 Paris (FR)
(72) Inventeur: AUBIE, Jean-Yves, F-35830 Betton (FR); PERRON, Claude, F-35830 Betton (FR)
(74) Mandataire: Lincot, Georges
(86) Numéro de dépôt international: FR8900635
(87) Numéro de publication internationale: WO9006643

(56) Documents cités:
- US-A- 3 823 266
- US-A- 4 344 180

## Description

L'invention concerne un dispositif de synchronisation pour une suite de trames à longueur variable. Ces trames comportent des données à longueur variable précédées d'un mot binaire ayant une longueur fixe et remplissant généralement deux fonctions : permettre la synchronisation d'un dispositif récepteur des données, par rapport à un dispositif émetteur des données, en séparant les données appartenant à des trames distinctes ; et transmettre des paramètres qui sont propres à la trame considérée et qui permettront d'exploiter les données transmises dans cette trame.

Pour protéger la synchronisation contre les erreurs de transmission, ce mot peut être constitué de N mots identiques, appelés préfixes, comportant chacun un mot appelé séparateur de trames, constitué par un motif fixé, et un mot appelé mot de paramètres, ayant une longueur fixée mais un contenu propre à la trame qui suit. Un dispositif de ce type est par exemple connu du brevet US 3 823 266.

Le but de l'invention est de proposer un dispositif de synchronisation permettant de détecter les séparateurs de trames et d'extraire les mots de paramètres, même en présence d'erreurs de transmission. L'objet de l'invention est un dispositif de synchronisation comportant des moyens de calcul de corrélation pour détecter les séparateurs même s'ils sont tous plus ou moins affectés par des erreurs de transmission, et pour en déduire des intervalles de temps pendant lesquels les mots de paramètres peuvent être extraits de la suite des trames.

Selon l'invention, un dispositif de synchronisation pour une suite de trames à longueur variable, chaque trame commençant par N mots séparateurs identiques et séparés par un intervalle constant,
comportant :
- des moyens pour calculer N valeurs dites de corrélation, traduisant respectivement la corrélation entre une suite de bits identiques à ceux de chaque séparateur et N suites de données binaires constituées respectivement en retardant les trames de i fois l'intervalle des séparateurs, pour i = O à N-1 ;
- des moyens (9) pour fournir un signal (R) dit de reconnaissance, lorsque ces N valeurs de corrélation sont toutes supérieures à une valeur de seuil, ce signal indiquant que N séparateurs sont reconnus, caractérisé en ce que les moyens pour calculer N valeurs de corrélation comportent N dispositifs de calcul de corrélation, initialisés par un dispositif d'initialisation comportant :
- des moyens pour retarder la suite des trames, en restituant N-1 suites de trames retardées, chaque suite ayant un retard de i fois l'intervalle des séparateurs, pour i = 1 à N-1 ;
- des moyens pour comparer bit par bit, les valeurs de la suite de trames non retardée et les valeurs des N-1 suites retardées et fournir un signal binaire, dit majoritaire, dont la valeur est constituée de la valeur majoritaire, parmi les N valeurs qui sont comparées ;
- des moyens pour détecter dans ce signal binaire une suite de bits identiques à ceux d'un séparateur, et pour fournir alors un signal d'initialisation pour les dispositifs de calcul de corrélation.

L'invention sera mieux comprise et d'autres détails apparaîtront à l'aide de la description ci-dessous et des figures l'accompagnant :
- la figure 1 représente le chronogramme d'un exemple de trame à longueur variable ;
- la figure 2 représente le schéma synoptique d'un exemple de réalisation d'un dispositif de synchronisation selon l'invention.

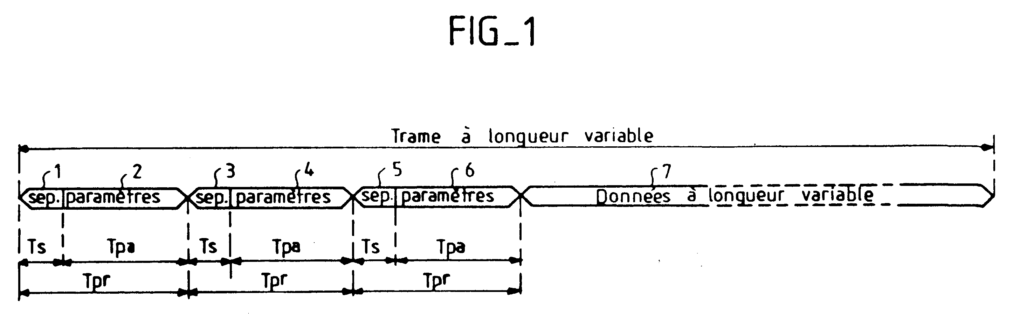

La trame à longueur variable représentée sur la figure 1 comporte un préfixe répété identiquement trois fois, chaque préfixe ayant une durée Tpr, et comporte des données 7, à longueur variable. Le premier préfixe est constitué par un séparateur 1 et par un mot de paramètres 2. Le deuxième préfixe est constitué d'un séparateur 3 et d'un mot de paramètres 4. Le troisième préfixe est constitué d'un séparateur 5, et d'un mot de paramètres 6. Chaque séparateur 1, 3, 5, comporte le même motif binaire et a une durée identique Ts. Il permet de reconnaître la frontière entre deux trames successives. Chaque mot de paramètres 2, 4, 6, comporte le même nombre de bits et a une durée identiques Tpa, mais a un contenu qui est propre à la trame considérée. Les trois préfixes d'une trame donnée comportent trois mots de paramètres qui sont identiques.

La synchronisation d'un dispositif décodeur nécessite de reconnaître les séparateurs 1, 3, 5, malgré les erreurs de transmission, et de déterminer leur position afin de savoir quand commencent les données 7. D'autre part, le décodage des données 7 nécessite de connaître, avec une parfaite exactitude, les paramètres obtenus par les trois mots de paramètres 2,4,6.

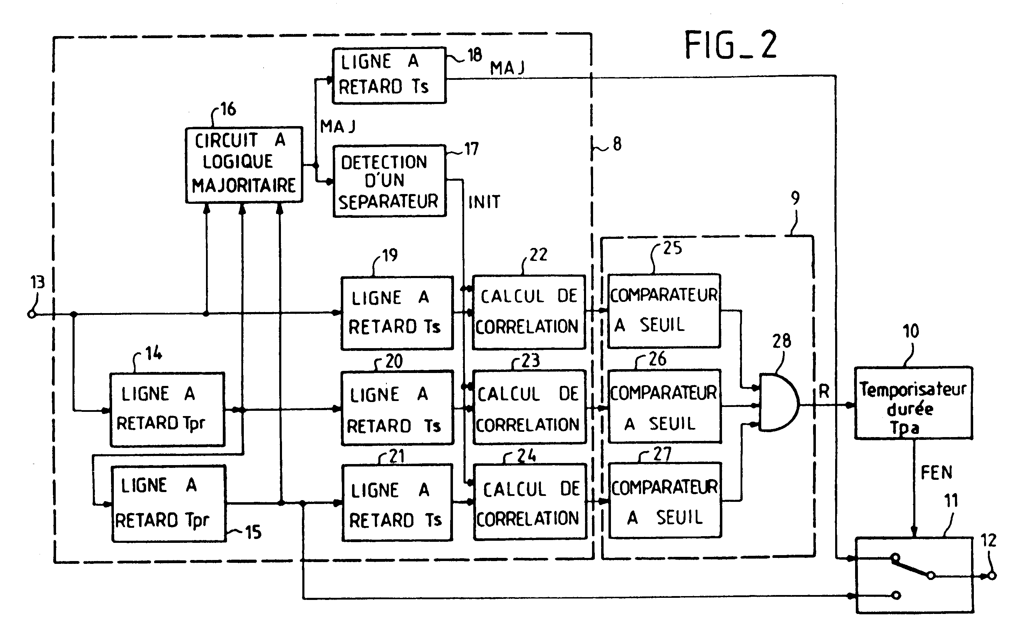

La figure 2 représente le schéma synoptique d'un exemple de réalisation du dispositif de synchronisation selon l'invention, pour la synchronisation d'un décodeur recevant des trames à longueur variable telles que celles représentées sur la figure 1. Cet exemple comporte : une borne d'entrée 13 recevant la suite des trames à longueur variable ; un dispositif de calcul 8 pour calculer trois valeurs de corrélation ; un circuit logique 9 pour fournir un signal R dit de reconnaissance, lorsque les trois valeurs de corrélation sont toutes supérieures à une valeur de seuil prédéterminée, ce signal R indiquant que trois séparateurs qui précèdent une trame sont reconnus ; un temporisateur numérique 10, ayant une temporisation de durée Tpa ; un multiplexeur 11, à deux entrées et une sortie ; et une borne de sortie 12 qui est reliée, dans cet exemple, à une mémoire tampon non représentée. La borne de sortie 12 fournit d'une part les données 7 contenues dans chaque trame, et d'autre part le contenu des mots de paramètres 2, 4, 6, extraits des trois préfixes situés au début de chaque trame.

Le dispositif de calcul 8 comporte : deux lignes à retard numériques, 14 et 15, chacune procurant un retard égal à la durée Tpr d'un préfixe ; quatre lignes à retard numériques, 18 à 21, chacune procurant un retard égal à la durée Ts d'un séparateur ; un dispositif 17 de détection d'un séparateur ; et trois dispositifs de calcul de corrélation, 22 à 24.

Le dispositif de calcul 8 possède une entrée reliée à la borne d'entrée 13, cette entrée étant reliée : à une entrée du circuit 16, à une entrée de la ligne à retard 19, et à une entrée de la ligne à retard 14. Une sortie de la ligne à retard 14 est reliée : à une entrée du circuit 16 ; à une entrée de la ligne à retard 15 ; et à une entrée de la ligne à retard 20. Une sortie de la ligne à retard 15 est reliée : à une entrée du circuit 16 ; à une entrée de la ligne à retard 21 ; et à une première entrée du multiplixeur 11. Les lignes à retard 14 et 15 ont pour fonction de fournir respectivement la suite des trames avec un retard Tpr et 2 Tpr.

Ainsi les trois entrées du circuit 16 reçoivent respectivement trois suites de trames qui sont décalées dans le temps de telle sorte que la première entrée reçoit le ième bit du troisième préfixe au même moment que la deuxième entrée reçoit le ième bit du deuxième préfixe et que la troisième entrée reçoit le ième bit du premier préfixe. Le circuit 16 est un circuit à logique majoritaire, c'est-à-dire fournissant un signal binaire, noté MAJ, dont la valeur est égale à la valeur majoritaire parmi les trois valeurs appliquées respectivement aux trois entrées, pour chaque bit de la suite de trames à longueur variable. De même, les entrées des lignes à retard 19 à 21 reçoivent respectivement, au même instant, le ième bit du troisième préfixe, le ième bit du deuxième préfixe, et le ième bit du troisième préfixe.

Une sortie du circuit 16 est reliée à une entrée de la ligne à retard 18 et à une entrée du dispositif 17 de détection d'un séparateur. Ce dispositif 17 fournit un signal logique INIT lorsqu'il détecte, dans la suite des valeurs binaires majoritaires, un motif identique aux séparateurs attendus. La sortie du détecteur 17 est reliée à des entrées d'initialisation des dispositifs de calcul 22 à 24. Ces derniers possèdent des entrées reliées respectivement aux sorties des lignes à retard 19 à 21. Le signal INIT initialise un calcul de corrélation dans chacun des dispositifs 22 à 24 à l'instant où le dispositif de détection 17 achève de reconnaître un séparateur. Pour compenser le temps nécessaire au dispositif 17 pour reconnaître un séparateur, les lignes à retard 19 à 21 retardent d'une durée Ts les suites binaires qui sont appliquées respectivement aux entrées des dispositifs de calcul de corrélation, 22 à 24.

Chacun des dispositifs de calcul 22 à 24 détermine une valeur de corrélation qui est égale au nombre de bits qui sont identiques dans la suite de valeurs binaires appliquée à l'entrée du dispositif de calcul et dans une suite de valeurs binaires égales aux bits constituant un séparateur. Grâce au dispositif 17 de détection d'un séparateur, le calcul commence précisément à l'instant où le dispositif 22 commence à recevoir le séparateur 5, le dispositif 23 commence à recevoir le séparateur 3, et le dispositif 24 commence à recevoir le séparateur 1. Après un intervalle de temps de durée Ts, les dispositifs de calcul 22 à 24 fournissent trois valeurs de corrélation qui sont d'autant plus faibles qu'il y a plus de bits erronés respectivement dans le séparateur 5, dans le séparateur 3, et dans le séparateur 1. Trois sorties des dispositifs de calcul 22 à 24 constituent trois premières sorties du dispositif de calcul 8 et sont reliées à trois entrées du dispositif de calcul 9.

Le dispositif de calcul 9 comporte : trois comparateurs à seuil, 25 à 27, ayant une même valeur de seuil prédéterminée ; et une porte logique ET 28. Les trois entrées du dispositif 9 sont constituées respectivement par trois entrées des comparateurs à seuil 25 à 27. Trois sorties de ces comparateurs sont reliées respectivement à trois entrées de la porte 28. La sortie de cette dernière constitue une sortie du dispositif 9 qui est relié à une entrée de commande du temporisateur 10. Le seuil des comparateurs 25 à 27 correspond à un certain taux d'erreurs sur chacun des séparateurs 1, 3, 5. Par example, si chaque séparateur comporte 41 bits, une valeur de seuil égale à 38 permet de considérer comme valide chaque séparateur comportant 38 bits exacts et 3 bits erronés. Lorsque les trois valeurs de corrélation sont supérieures à la valeur de seuil, les comparateurs 25 à 27 fournissent trois signaux qui valident la porte ET 28. La sortie de la porte 28 fournit alors un signal logique R, dit de reconnaissance, indiquant que trois séparateurs sont reconnus. Ce dispositif de synchronisation permet donc de reconnaître des séparateurs de trames à longueur variable, même s'ils comportent chacun quelques bits erronés.

Une seconde fonction de ce dispositif de synchronisation est d'extraire, avec la plus grande exactitude possible, les paramètres propres aux données 7, en vue de pouvoir décoder correctement ces données. Comme les séparateurs 1, 3, 5, les mots de paramètres 2, 4, 6 sont affectés d'erreurs binaires. Le circuit 16 à logique majoritaire permet d'éliminer ces erreurs s'il n'y a qu'une valeur erronée sur les trois valeurs d'un même bit du mot de paramètres. Lorsqu'il n'y a pas d'erreurs de transmission, le circuit 16 fournit trois fois le préfixe exact. Ce n'est plus le cas, en présence d'erreurs de transmission. En effet, pendant l'arrivée du deuxième préfixe sur la borne d'entrée 13, le circuit 16 reçoit respectivement sur ces trois entrées : le deuxième préfixe, le premier préfixe, et une suite quelconque constituée par des données de la précédente trame à longueur variable. La moindre erreur sur un bit du premier ou du deuxième préfixe provoque donc une erreur dans le préfixe restitué dans le circuit 16.

De même après la fin de l'arrivée du troisième préfixe sur la bande d'entrée 13, les lignes à retard 14 et 15 restituent respectivement le troisième et le deuxième préfixe. Par conséquent, le circuit 16 reçoit respectivement sur ses trois entrées : le deuxième préfixe, le troisième préfixe, et une suite binaire quelconque constituée de données. La moindre erreur sur le deuxième ou le troisième préfixe conduit le circuit 16 à restituer un préfixe erroné. Le seul cas où le circuit 16 tire partie de la redondance des trois préfixes, est donc le cas où il reçoit simultanément sur ses trois entrées : le premier, le deuxième, et le troisième préfixe. Dans ce cas, la sortie du circuit 16 restitue un préfixe dans lequel les erreurs de transmission sont corrigées par la décision majoritaire, dans la mesure du possible.

Le dispositif selon l'invention comporte un multiplexeur 11 pour extraire de la suite binaire majoritaire MAJ, fournie par le circuit 16, uniquement les bits situés dans un intervalle de temps où le circuit 16 fournit un préfixe ayant l'exactitude la meilleure. Pour cela, la suite binaire MAJ est appliquée à une seconde entrée du multiplexeur 11, par l'intermédiaire de la ligne à retard 18 procurant un retard Ts compensant le retard dû au fonctionnement du dispositif 17. Une sortie du multiplexeur 11 est reliée à la borne de sortie 12 du dispositif. Une entrée de commande du muitiplexeur 11 est reliée à une sortie du temporisateur 10. Une entrée de commande du temporisateur 10 est reliée à la sortie du dispositif 9 pour recevoir le signal de reconnaissance R.

Quand le temporisateur 10 reçoit le signal R, il commande une commutation du multiplexeur 11, par un signal logique FEN, dit de fenêtre, dont la durée est égale à la durée Tpa d'un mot de paramètres. Pendant cette durée le multiplexeur 11 transmet donc le mot de paramètres, rectifié éventuellement par les décisions majoritaires. Pendant le reste du temps, le multiplexeur 11 transmet la suite des données binaires retardées qui est fournie par la sortie de la ligne à retard 15, ces données binaires ne pouvant pas être rectifiées par une logique majoritaire pulsqu'elles ne comportent pas de redondances.

Le dispositif 17 de détection d'un séparateur et les dispositifs 22 à 24 de calcul de corrélation peuvent être réalisés de différentes manières, qui varient notamment en fonction du type de motif utilisé pour constituer les séparateurs. Par exemple, si chaque séparateur est constitué de 40 bits de valeur 0 et de 1 bit de valeur 1, il est possible de constituer le dispositif 17 et chaque dispositif de calcul de corrélation, 22 à 24, au moyen d'un compteur qui compte le nombre de zéros dans la suite binaire. La réalisation de ces dispositifs pour d'autres motifs séparateurs est à la portée de l'homme de l'Art.

L'invention est applicable notamment au domaine du codage et du décodage d'images de télévision, pour assurer la synchronisation d'un décodeur.

## Revendications

1. Dispositif de synchronisation pour une suite de trames à longueur variable, chaque trame commençant par N mots séparateurs (1, 3, 5) identiques et séparés par un intervalle constant (Tpr),
comportant :
- des moyens (8) pour calculer N valeurs dites de corrélation, traduisant respectivement la corrélation entre une suite de bits identiques à ceux de chaque séparateur (1, 3, 5) et N suites de données binaires, constituées respectivement en retardant les trames de i fois l'intervalle (Tpr) des séparateurs, pour i = O à N-1 ;
- des moyens (9) pour fournir un signal (R) dit de reconnaissance, lorsque ces N valeurs de corrélation sont toutes supérieures à une valeur de seuil, ce signal (R) indiquant que N séparateurs sont reconnus,
caractérisé en ce que les moyens (8) pour calculer N valeurs de corrélation comportent N dispositifs de calcul de corrélation (22 à 24), initialisés par un dispositif d'initialisation comportant :
- des moyens (14, 15) pour retarder la suite des trames, en restituant N-1 suites de trames retardées, chaque suite ayant un retard de i fois l'intervalle (Tpr) des séparateurs (1, 3, 5), pour i = 1 à N-1 ;
- des moyens (16) pour comparer bit par bit, les valeurs de la suite de trames non retardée et les valeurs des N-1 suites retardées et fournir un signal binaire (MAJ), dit majoritaire, dont la valeur est constituée de la valeur majoritaire, parmi les N valeurs qui sont comparées ;
- des moyens (17) pour détecter dans ce signal binaire (MAJ) une suite de bits identiques à ceux d'un séparateur, et pour fournir alors un signal d'initialisation (INIT) pour les dispositifs de calcul de corrélation (22 à 24).

2. Dispositif selon la revendication 1 pour extraire un mot binaire, appelé mot de paramètres (2, 4, 6), ayant une longueur fixée (Tpa), associé à chacun des N séparateurs (1, 3, 5) au début de chaque trame, ce mot étant constitué d'informations propres à cette trame, caractérisé en ce qu'il comporte en outre :
- un dispositif de temporisation (10) déclenché par le signal de reconnaissance (R), et fournissant un signal dit de fenêtre (FEN) dont la durée est égale à la durée du mot (2, 4, 6) à extraire ;
- un dispositif de commutation (11) commandé par le signal de fenêtre (FEN) pour extraire, du signal majoritaire (MAJ), le mot de paramètres (2, 4, 6), en transmettant le signal majoritaire (MAJ) uniquement pendant la durée de ce signal de fenêtre (FEN).

## Claims

1. Synchronization device for a sequence of variable-length frames, each frame beginning with N identical separator words (1, 3, 5) separated by a constant gap (Tpr),
including:
- means (8) for calculating N so-called correlation values conveying respectively the correlation between a sequence of bits identical to those of each separator (1, 3, 5) and N binary data sequences respectively constructed by delaying the frames by i times the gap (Tpr) of the separators, for i = 0 to N-1;
- means (9) for delivering a so-called recognition signal (R) when these N correlation values are all above a threshold value, this signal (R) indicating that N separators have been recognized,
characterized in that the means (8) for calculating N correlation values include N correlation calculation devices (22 to 24) initialized by an initialization device including:
- means (14, 15) for delaying the sequence of frames, thereby restoring N-1 delayed frame sequences, each sequence having a delay of i times the gap (Tpr) of the separators (1, 3, 5), for i = 1 to N-1;
- means (16) for comparing bit by bit the values of the undelayed sequence of frames and the values of the N-1 delayed sequences and for delivering a so-called majority binary signal (MAJ) whose value consists of the majority value out of the N values which are compared;
- means (17) for detecting in this binary signal (MAJ) a sequence of bits identical to those of a separator, and for then delivering an initialization signal (INIT) for the correlation calculation devices (22 to 24).

2. Device according to Claim 1 for extracting a binary word termed a parameter word (2, 4, 6) having a fixed length (Tpa) and being associated with each of the N separators (1, 3, 5) at the start of each frame, this word consisting of information specific to this frame, characterized in that it furthermore includes:
- a timeout device (10) triggered by the recognition signal (R) and delivering a so-called window signal (FEN) whose duration is equal to the duration of the word (2, 4, 6) to be extracted;
- a switching device (11) controlled by the window signal (FEN) in order to extract the parameter word (2, 4, 6) from the majority signal (MAJ), while transmitting the majority signal (MAJ) only for the duration of this window signal (FEN).

## Patentansprüche

1. Synchronisationsvorrichtung für eine Folge von Rahmen variabler Länge, wobei jeder Rahmen mit ^N identischen Trennwörtern (1, 3, 5) beginnt, die durch ein konstantes Intervall (Tpr) getrennt sind, mit:
- Mitteln (8) zur Berechnung von N Korrelationswerten, die die Korrelation zwischen einer Folge von jedem Trennwort (1, 3, 5) identischen Bits mit N Folgen von Binärdaten darstellen, die durch Verzögerung der Rahmen von i mal dem Zeitintervall (Tpr) der Trennwörter gebildet werden, wobei gilt 0 ≦ i ≦ N-1;
- mit Mitteln (9), um ein Erkennungssignal (R) zu liefern, wenn diese N Korrelationswerte alle größer als ein Schwellwert sind, wobei dann dieses Signal (R) angibt, daß N Trennwörter erkannt worden sind, dadurch gekennzeichnet, daß die Mittel (8) zur Berechnung von N Korrelationswerten N Korrelationsrechenvorrichtungen (22 bis 24) enthalten, die durch eine Initialisierungsvorrichtung initialisiert werden, wobei diese Initialisierungsvorrichtung enthält:
- Mittel (14, 15) zur Verzögerung der Folge von Rahmen, die N-1 verzögerte Folgen von Rahmen abgeben, wobei jede Folge eine Verzögerung von i mal dem Intervall (Tpr) der Trennwörter (1, 3, 5) besitzt, wobei gilt 1 ≦ i ≦ N-1;
- Mittel (16) zum Vergleich Bit für Bit der Werte der Folge der nicht verzögerten Rahmen und der Werte der N-1 verzögerten Folgen und zur Lieferung eines Mehrheitsbinärsignals (MAJ), dessen Wert aus dem Wert der Mehrheit der N miteinander verglichenen Werte gebildet wird,
- Mittel (17), um in diesem Binärsignal (MAJ) eine Folge identischer Bits mit denen eines Trennworts zu erfassen und um dann ein Initialisierungssignal (INIT) für die Korrelationsrechenvorrichtung (22 bis 24) zu liefern.

2. Vorrichtung nach Anspruch 1 zur Erfassung eines Parameterbinärworts (2, 4, 6), das eine vorgegebene Länge (Tpa) besitzt und jedem der N Trennwörter (1, 3, 5) zu Beginn jedes Rahmens zugeordnet ist, wobei dieses Wort von Informationen gebildet wird, die für diesen Rahmen spezifisch sind, dadurch gekennzeichnet, daß sie außerdem enthält:
- eine Zeitverzögerungsvorrichtung (10), die vom Erkennungssignal (R) ausgelöst wird und ein Fenstersignal (FEN) liefert, dessen Dauer gleich der Dauer des zu entnehmenden Parametersignals (2, 4, 6) ist,
- eine Schaltvorrichtung (11), die vom Fenstersignal (FEN) gesteuert wird, um aus dem Mehrheitsbinärsignal (MAJ) das Parameterwort (2, 4, 6) zu entnehmen, indem das Mehrheitssignal nur während der Dauer dieses Fenstersignals übertragen wird.
